# EUROPEAN PATENT APPLICATION

(11) **EP 1 081 807 A2**
(43) Date of publication of application: **07.03.2001**
(21) Application number: 00114356.9
(22) Date of filing: 05.07.2000
(51) Int. Cl.: H01R 24/00

(54) **Contact-connector module for mobile telephone apparatuses**

(30) Priority: 30.08.1999 DE 29915180 U
(71) Applicant: ITT MANUFACTURING ENTERPRISES, INC., Wilmington, Delaware 19801 (US)
(72) Inventor: Illig, Manfred, 71384 Weinstadt (DE); Gollhofer, Martin, 70736 Fellbach (DE); Clauss, Dieter, 73663 Berglen (DE); Andrews, Derek, Basingstoke, Hants RG 22 5EN (GB)
(74) Representative: Dreiss, Fuhlendorf, Steimle & Becker

(57) **Abstract**

A contact-connector module (10) for installation in mobile telephone apparatuses for the purpose of connecting the said apparatus to an external connection device, such as a motor vehicle connection, data plug, mains apparatus and the like, having an arrangement (13, 16) consisting of signal contacts, coaxial antenna contacts and supply-voltage contacts comprises an elongated/flat insulating body (11) in which the signal, coaxial antenna and supply-voltage contacts are held and on the upper side (18) and underside (21) of which the contact-connecting ends (17, 22, 26, 31, 32,33) are held in a freely accessible manner.

## Description

The present invention relates to a contact-connector module for installation in mobile telephone apparatuses in accordance with the pre-characterising clause of claim 1.

Contact-connector modules are known which are installed in the mobile telephone apparatus in such a way that the module is accessible from the narrow underside of the said apparatus. In these cases, the signal contacts and coaxial antenna contacts, in particular, are constructed as plug-connector parts. As a result of this, these contact-connector modules are of relatively large build, so that they take up, in the mobile telephone apparatus, an amount of space which stands in the way of further miniaturisation of such apparatuses.

It is also known practice to put the coaxial antenna contacts on the rear side of the mobile telephone apparatus in the vicinity of the apparatus's own antenna. This has advantages in respect of the quality of reception. However, a disadvantage is the dividing-up of the contact-connector module into two units, with the consequence that the external connection devices have to be of bipartite construction in some cases.

The object of the present invention is to provide a contact-connector module for installation in mobile telephone apparatuses of the type initially mentioned, which can be constructed so as to be of flatter and, as a whole, smaller build, and which is suitable for installation in the rear side of the mobile telephone apparatus even in the case of a very flat design.

In order to achieve this object, the features indicated in claim 1 are provided in a contact-connector module of the aforesaid type.

As a result of the measures according to the invention, the contact-connector module can be of extremely flat and, as a whole, small construction, not least because plug-in elements are eliminated.

According to the features of claim 2, the insulating body is advantageously surrounded by the signal and supply-voltage contacts. According to the features of claim 3, the coaxial antenna contacts are arranged inside a recess in the insulating body.

Particularly cost-saving manufacture of the contact-connector module is obtained if the features according to claim 4 are provided. In this case, it is merely necessary to place the individual contacts in the correct manner in, for example, the injection mould, in which they then have the material of the insulating body injection-moulded around them. As a result of this, not only are the costs lowered on account of the reduction in manufacturing operations, but also the tolerances which are otherwise present are reduced.

According to the features of one or more of claims 5 to 7, those connecting ends of the contacts which point towards the external connection devices are of flat construction or are constructed as spring elements, the corresponding contacts of the connection device being either constructed as spring elements or of flat construction, while the connecting ends towards the circuit board of the mobile telephone apparatus may either likewise be of spring-element-like construction or else may be provided with soldering tags.

According to the features of claim 8, the insulating body may be held in a stationary manner in the rear wall of the mobile telephone apparatus. However, it is also possible, if there is a soldered connection to the circuit board, to use the said soldered connection as a stationary mechanical fixing system at the same time.

Further details of the invention can be inferred from the following description, in which the invention is explained and described in greater detail with the aid of the exemplified embodiment represented in the drawings, in which:
- figure 1: shows, in a perspective top view, a contact-connector module according to a preferred exemplified embodiment of the present invention,
- figure 2: shows, in a perspective rear view, a variant of the module illustrated in figure 1,
- figures 3A and 3B: show, in a perspective top view and rear view respectively, an intermediate step in the manufacture of the contact-connector module illustrated in figure 2,
- figure 4: shows, in a truncated representation, the rear view of a mobile telephone provided with a contact-connector module as illustrated in figure 1, and
- figure 5: shows, in a diagrammatic, truncated representation, a supporting device, which is provided with a counter-contact arrangement, for a mobile telephone according to figure 4.

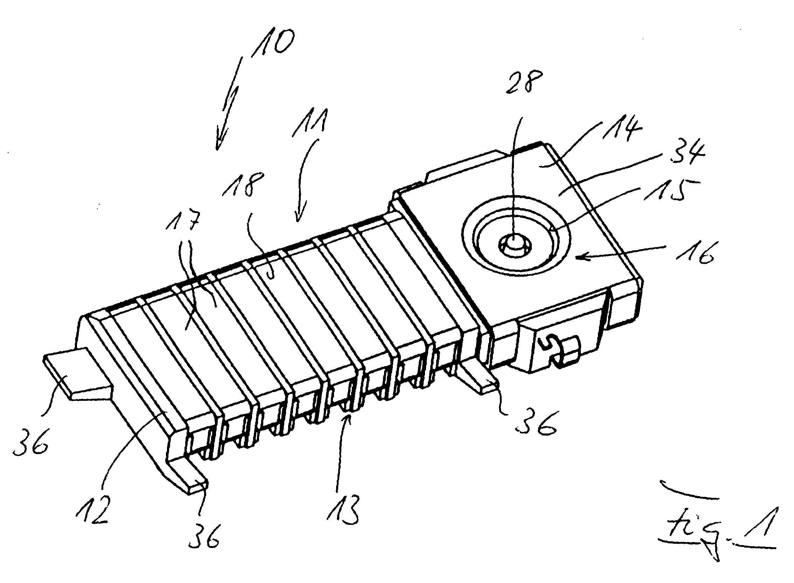

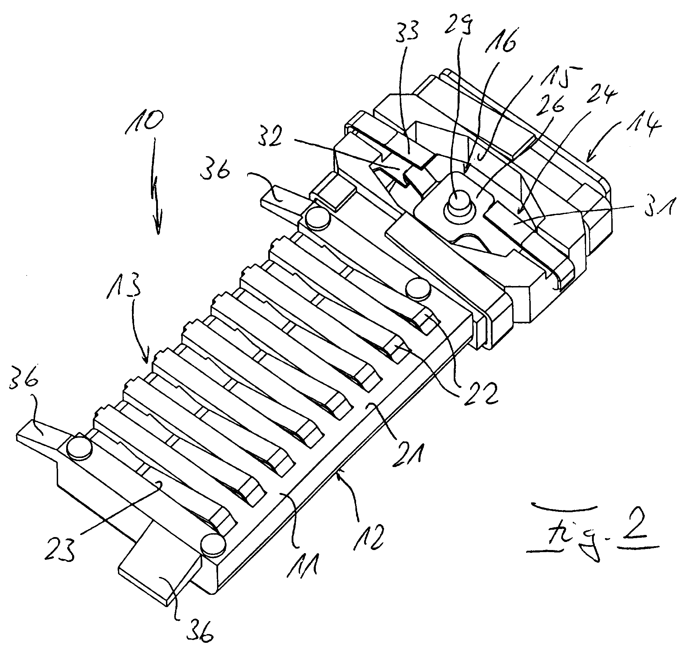

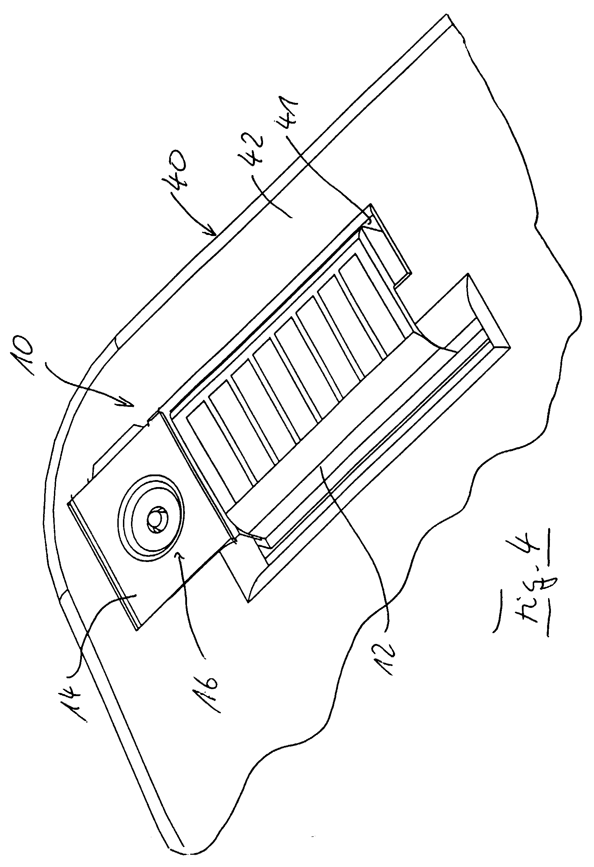

The contact-connector module 10 represented in figures 1 and 2 is used for installation in the rear side of a mobile telephone apparatus, preferably in a region close to the apparatus's own antenna, which apparatus is represented in merely a token manner in figure 4. In this instance, the contact-connector module 10 is arranged, with its corresponding upper side exposed, in an indentation 41 in the rear side 42 of the casing. The indentation 41 is provided with rounded edges for easier introduction of the module 10.

The contact-connector module 10 possesses a basic body 11 made of an electrically insulating material, the said basic body 11, which will hereinafter be designated as the "insulating body", having a flat, elongatedly rectangular shape. The basic body 11 possesses a main part 12, which is surrounded on three sides by an arrangement 13 consisting of signal contacts and supply-voltage contacts, and a rectangular-shaped, moulded-on extension part 14 which, for example, may also be semicircular and which receives a coaxial antenna-contact arrangement 16 in a recess 15.

In the exemplified embodiment represented, some of the connecting ends, or rather the first connecting ends 17 of the signal and supply-voltage contacts are laid and held flat on the upper side 18 of the main part 12 of the insulating body 11 over, essentially, the entire breadth of the latter (figure 1). On the underside 21 of the main part 12 of the insulating body 11, the other or second connecting ends of the signal and supply-voltage contacts belonging to the arrangement 13 are placed in, and moulded into parallel recesses 23 in such a way that they form contact fingers which are resilient transversely to the longitudinal extent and towards the underside 21.

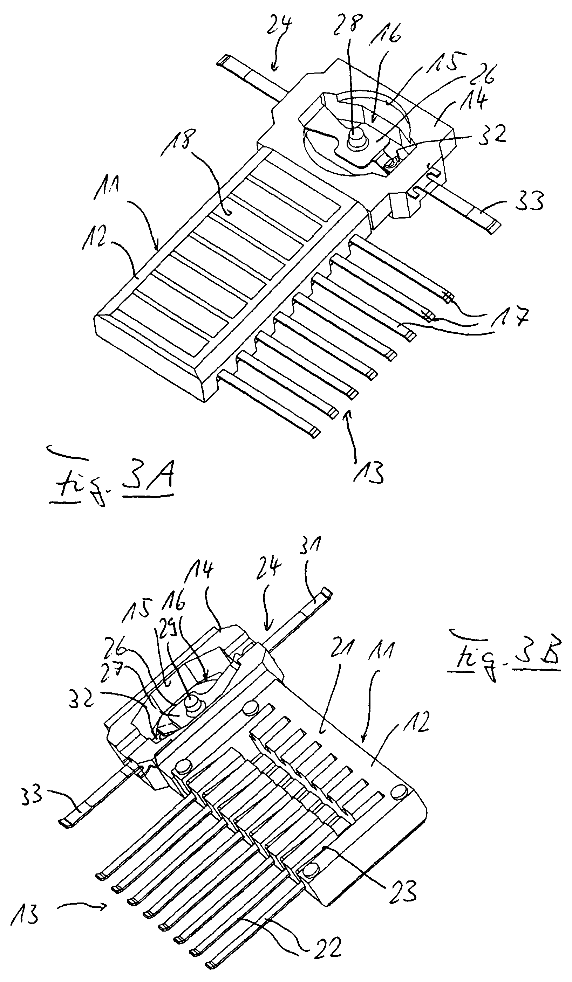

A first connecting end 26 of the inner antenna contact 24 of the coaxial antenna-contact arrangement 16 is held, in a resiliently movable manner, in the recess 15 in the extension part 14. This first connecting end 26 is formed by nose-like projections 28, 29 arranged on either side of a small, resiliently movable plate. A second connecting end 31 of the inner antenna contact 24 is bent over on the underside 21 of the extension part 14 of the insulating body 11. A third connecting end 32 belonging to the inner antenna contact 24 rests, in a contact-making manner, against the first connecting end 26 and a fourth connecting end 33, which is in one piece with the said third connecting end, is bent over towards the underside 21 of the insulating body 11. For a further explanation of the coaxial arrangement 16, reference should be made to the earlier British Patent Application 99 06 699.1 (figures 2 and 3).

The second and fourth connecting ends 31 and 33 respectively, are constructed on the underside 21 as resilient fingers. In the condition in which they are installed in the mobile telephone apparatus 40, the first and third contact ends 26 and 32 of the inner connecting contact 24 make contact with one another. In this exemplified embodiment, the connecting ends 22, 31, 33, which are constructed as resilient fingers, are intended for contact-making with the corresponding contacts on a printed circuit board inside the mobile telephone apparatus when the module 10 is in the installed condition. The extension part 14 is masked by a metal cap 34 which surrounds the inner antenna contact 24 and forms the outer antenna contact of the coaxial contact arrangement 16.

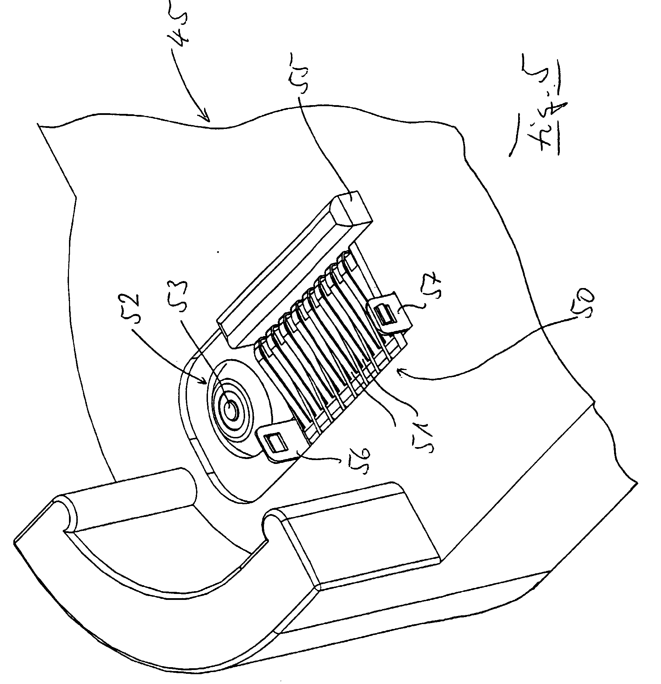

Figure 5 shows an external connection device in the form of a receiving or supporting device 45 for a mobile telephone 40 which is represented in truncated form in figure 4. The supporting device 45 possesses a counterplug-connector 50 for the contact-connector module 10. The counterplug-connector 50 is provided with signal contacts 51 in the form of spring fingers which correspond with the flat first connecting ends 17 of the contact-connector module 10. In addition, the counterplug-connector 50 possesses a coaxial contact 52 which is intended and constructed for contact-making with the projection 28 on the coaxial contact arrangement 16 of the contact-connector module 10. If the stationary inner contact 53 of the coaxial contact 52 of the counterplug-connector 50 makes contact with the projection 28, the small plate 26 is deflected so that, one the one hand, the contact connection between the first and third contact ends 26, 32 is severed and, on the other hand, a contact connection is produced between the oppositely located projection 29 and the relevant contact on the printed circuit board in the mobile telephone apparatus, a fact which means separation of the apparatus's own antenna and the switching-on of the external antenna, as is apparent from the aforesaid earlier British patent application. It is obvious that, under these circumstances, there is contact between the outer contacts of the coaxial contacts 16, 52 of the module 10 and the counterplug-connector 50. On one side, the supporting device 45 possesses, alongside the counterplug-connector 50, a strip-like elevation 55 which is provided with lead-in bevels and fits into the indentation represented in figure 4 in the rear side 42 of the mobile telephone 40. The contact-connector module 10 is thereby positioned in relation to the counterplug-connector 50. At either end of the counterplug-connector 50, the supporting device 45 is provided with snap-in hooks 56, 57 which serve, for example, to arrest a cable plug.

In an exemplified embodiment, which is not represented, of the present invention, the second connecting ends 22 of the arrangement 13 and the second and fourth connecting ends 31, 33 of the arrangement 16 are constructed on the underside 21 of the insulating body 11 in such a way that they are used, not for solder-less, spring-type contact-making but for soldered connection to the printed circuit board in the mobile telephone apparatus.

Figures 3A and 3B shows a step in the manufacture of the two abovementioned variants for the connection to the circuit boards of the mobile telephone apparatus in question. The contact arrangements 13 and 16 are placed in an injection mould, not represented, whereupon material belonging to the insulating body 11, which is to be manufactured by injection moulding, is injection moulded around certain regions of the individual signal, coaxial antenna and supply-voltage contacts. After this injection-moulding operation, an intermediate stage of the module 10 is obtained, as shown in figures 3A, 3B. After that, the connecting ends of the individual contacts are bent over towards the upper side 18 and underside 21, and optionally shaped, in the form described in connection with figures 1 and 2 or with the above variant.

In the variants represented in figures 1 and 2, the insulating body 11 possesses moulded-on tongues 36 which serve for mechanical fixing inside the rear wall of the casing of the mobile telephone apparatus. Under these circumstances, the said tongues 36 rest against the side of the casing wall under the action of the spring fingers resting on the circuit board. It is obvious that the said flaps 36 are omitted if the module 10 is fastened to the circuit board and held mechanically by means of a soldered connection.

Possible examples of external connection devices are motor vehicle connecting elements, data plugs which can be connected to a PC or the like, mains apparatuses or the like.

## Claims

1. Contact-connector module (10) for installation in mobile telephone apparatuses for the purpose of connecting the said apparatus to an external connection device, such as a motor vehicle connection, data plug, mains apparatus and the like, the said module having an arrangement (13, 16) consisting of signal contacts, coaxial antenna contacts and supply-voltage contacts, **characterised by** an elongated/flat insulating body (11) in which the signal, coaxial antenna and supply-voltage contacts are held and on the upper side (18) and underside (21) of which the contact-connecting ends (17, 22, 26, 31, 32, 33) are held in a freely accessible manner.

2. Module according to claim 1, characterised in that the signal and supply-voltage contacts surround the insulating body (11) on three sides, being let into the relevant narrow end face of the insulating body (11).

3. Module according to claim 1 or 2, characterised in that the insulating body (11) has a through-recess (23) in which the connecting ends of the coaxial antenna contacts are arranged.

4. Module according to at least one of claims 1 to 3, characterised in that partial regions of the signal, coaxial antenna and supply-voltage contacts are held in a manner having the insulating body (11) injection-moulded around them.

5. Module according to at least one of claims 1 to 4, characterised in that those connecting ends (17) of the signal and supply-voltage contacts which face towards the external connection device (45) are essentially constructed so as to be flat or so as to be applied in a resilient manner.

6. Module according to one of claims 1 to 5, characterised in that those connecting ends (22, 31, 33) of the signal, coaxial antenna and supply-voltage contacts which face towards the circuit board are constructed so as to be applied in a resilient manner.

7. Module according to at least one of claims 1 to 3, characterised in that those connecting ends of the signal, coaxial antenna and supply-voltage contacts which face towards the circuit board are constructed as projecting soldering tags.

8. Module according to at least one of the preceding claims, characterised in that the insulated body (11) is held in a fixed manner in the rear wall of the mobile telephone apparatus.
